(19)

Europäisches Patentamt

European Patent Office

Office européen des brevets

(11) **EP 3 301 620 A1**

(12) **EUROPEAN PATENT APPLICATION**

(43) Date of publication:
04.04.2018 Bulletin 2018/14

(51) Int Cl.:
*G06Q 10/06* *(2012.01)*

(21) Application number: 16192073.1

(22) Date of filing: 03.10.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Bartucci S.p.A.
37038 Soave (VR) (IT)

(72) Inventors:
• BARTUCCI, Giovanni
i-37038 Soave (VR) (IT)
• FARELLA, Giorgia
i-35131 Padova (IT)

(74) Representative: Di Bernardo, Antonio
Thinx S.r.l.
Via Paleocapa, 7
20121 Milano (IT)

(54) **METHOD FOR COMPUTER IMPLEMENTED SELECTION OF TECHNOLOGIES TO BE APPLIED TO IMPROVE ENERGY EFFICIENCY OF A PLANT, AND RELATED SYSTEM**

(57) The present invention relates to a method and relevant computer system for implementing such method directed to the computerized selection of technologies to be applied in order to improve the energy efficiency of a plant by a multi-technology and multi-scenario approach. The method provides to acquire input data of the plant (402), to define a target function to be optimized and to acquire a set of technologies applicable to the plant (601), each technology comprising at least one apparatus characterized by its own consumptions and technical characteristics. Then an optimization process is implemented (305) which determines an optimal set of apparatuses optimizing the target function. The applicable technologies are selected in a wider group of investigable technologies by simulating (503) the use in the plant of the apparatuses of such technologies and by selecting (504) as the applicable technology the set of apparatuses of the investigable technology that are consistent with plant consumptions and constraints.

Figure 4

EP 3 301 620 A1

**Description**

**TECHNICAL FIELD**

The present invention relates to the field of systems for improving energy efficiency. Particularly the invention relates to a method according to the preamble of claim 1.

**PRIOR ART**

To accomplish energy efficiency means the ability of using physical systems to obtain a given result by employing less energy. It is necessary to be more and more efficient in using energy, by employing it in a rational manner and by eliminating waste due to non-optimal operation and management of systems and plants. Energy waste and losses are a hidden "storage" and energy efficiency allows them to be recovered and exploited to obtain considerable economic, environmental and social advantages.

Today several methods have been suggested for trying to provide energy efficiency in several fields, from the residential field to the tertiary service sector and to industrial field.

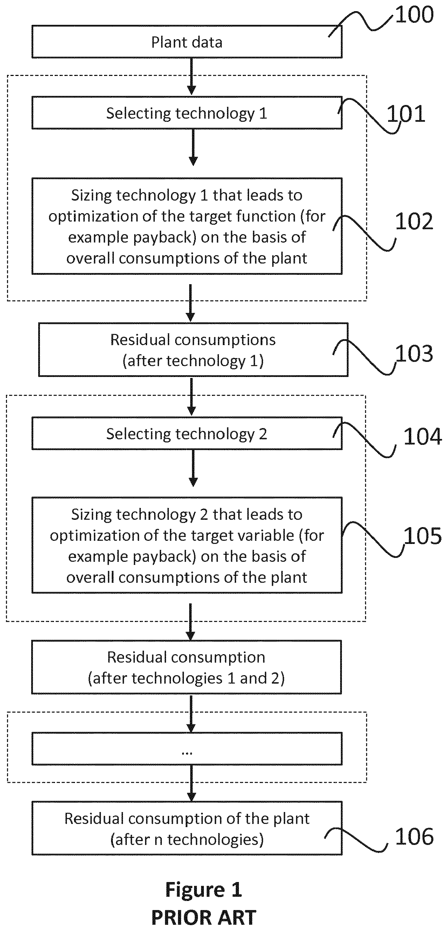

A first method provides to divide in sub-divisions (related to processes or technologies) the plant that is desired to be subjected to energy efficiency improvement and to search for energy efficiency measures among several technologies known by the designer according to a *one by one* approach in series. According to such method, shown in figure 1, once the input data of the plant are received (step 100) a first technology is selected (Technology 1, step 101) and the most efficient technological solution for such technology (or process) of the plant, for example for a boiler, is searched (step 102). The sizing of the first technology is carried out such to maximize (or minimize, depending on needs) a target function. For example the IRR (*Internal Rate of Return*) is maximized or *Payback* is minimized. Then the consumption of the plant is calculated (step 103) if Technology 1 is applied, and the second technology is found (Technology 2, step 104) and it is sized (step 105) starting from residual consumptions deriving from the implementation of the optimized Technology 1. Then the process is repeated for all the identified technologies with a sequential approach and never a transverse approach among the technologies up to the final calculation (step 106) of the consumptions of the plant deriving from applying all the technologies.

However such method for performing energy efficiency has some drawbacks, such as the need of defining a priority order of the technologies (an aspect that changes depending on the sensibility of the person implementing the method) and the fact that it does not consider the combined effect of the different technologies. Therefore generally this results in Technology 1 being over-sized and in a diffusion of energy efficiency lower than the "optimal" condition.

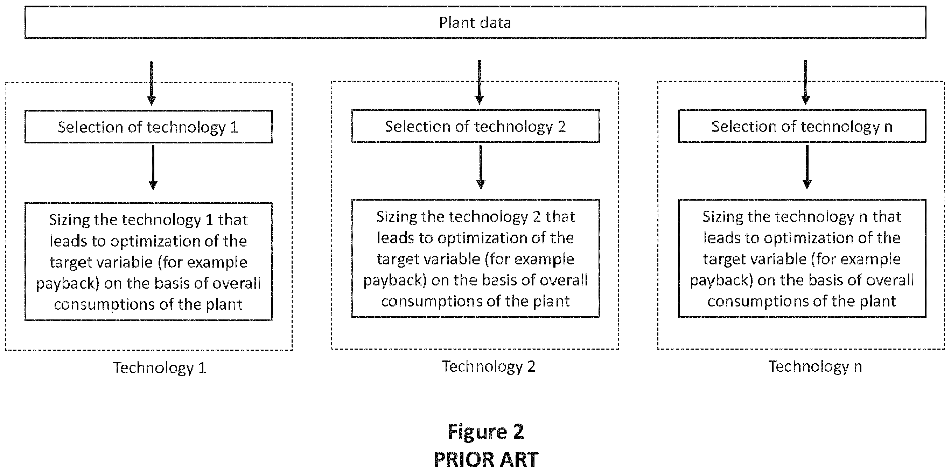

A second method (figure 2) provides to divide the plant in sub-divisions (related to process or technologies) and to search for energy efficiency measures selected among the several technologies known by the designer according to a *one by one* approach in parallel.

Therefore the several energy efficiency measures are found, selected, developed and designed in parallel, without interaction between the several measures, always trying to maximize (or minimize, depending on needs) the target function.

Also such method therefore has some drawbacks, such as technologies being over-sized. For example if Technology 1 is a cogenerator the first type of approach will tend to install a cogenerator with electric generation equal to or slightly lower than the rated load of the plant. If Technology 2 means to replace lighting bodies with LED lighting bodies, their installation will lead to a reduction of the rated load of the plant. Accordingly Technology 2 will lead to a reduced load behavior of Technology 1 (that will have a business plan worse than the supposed one).

Both the above methods are generally carried out by physical operators, that after carrying out an audit and after finding the technologies or the processes to be subjected to energy efficiency, define the solutions. This results in that the time for scheduling the energy optimization intervention are long and the result is not the best one.

Recently however software has been also suggested that determine the optimal technologies to be used in a plant to reach a target, for example as regards costs and/or consumptions.

For example E.T.A., Energy Track and Audit, is a software supporting energy audits using algorithms calculating savings and it has a database of sizes and prices of the technologies based on interpolations. The software gives a series of output energy efficiency measures with a sequential nature suggested on the basis of parameters that are calculated by E.T.A. Such parameters are a simple fixed assignation of a score on the basis of economical parameters of each identified technology: the technology that, by summing the several scores of its economical parameters, has reached the highest overall score is suggested as the first one. It has to be noted that E.T.A. as the second above mentioned method, is not able to size technologies with a transverse approach that prevents them from cannibalizing one with the other.

The article "Life Cycle Assessment of Mixed Municipal Solid Waste: Multi-input versus multi-output perspective" analyses four strategies for the management of Mixed Municipal Solid Waste (MMSW) in terms of environmental impact and potential advantages from the perspective of the Life Cycle Assessment (LCA) technique. To this end both a multi-input and a multi-output approach are applied, in order to evaluate the effect of these two perspectives on selected impact categories.

The article "Improving energy efficiency in Malawian tea industries using an integrated multi-objective optimization method combining IDA, DEA and evolutionary algorithms" discloses a method for generating efficient frontiers in multi-objective optimization problems, by using Index Decomposition Analysis (IDA), Data Envelopment Analysis (DEA) and evolutionary algorithms. The purpose of DEA is to measure the relative efficiency of several decision making units and reflects the various preferences of decision makers. IDA on the contrary aims at understanding the characteristics that underline changes in specific energy consumption at factory level.

The article "Stakeholders perspective on sustainable technology selection to achieve zero carbon retail buildings" deals with the design and construction of sustainable buildings, with various stakeholders involved with the overall aim of selecting appropriate technologies able to reduce energy consumption and carbon emissions. Previous studies and literature review indicate there is no comprehensive selection process to assist stakeholders. This can be classified as a complex multi-criteria decision problem due to the high number of alternatives, potential solutions and variety of stakeholders (e.g. clients, professional advisors, end-users) with multiple objectives leading to the slow take-up of sustainable technologies.

Using AHP survey and expert opinions, the identified criteria were weighted and ranked, with risk (37%) being the most important, followed by cost (22%), proven success (20%), time (12%), and sustainability (9%) the least important factor. Although the established criteria are most relevant for the selection of sustainable technologies for existing buildings, they can be beneficial for new buildings.

The article "Concurrent optimization of size and switch-on priority of a multisource energy system for a commercial building application" discloses that the main issues of multi-source systems are:

- the allocation strategy of the energy demands among the various technologies;
- the proper sizing of each technology.

To this end, a model able to take into consideration the load profiles for electricity, heating and cooling for a year is developed and implemented in Matlab® environment. The performance of the energy system is modeled through a systemic approach. The optimization of the size and switch-on priority of the different technologies composing the multi-source energy plant is performed by using a genetic algorithm.

The article "A multi-objective optimization framework for risk-controlled integration of renewable generation into electric power systems" deals with the optimization by combination of different plants for production from renewable resource. The article introduces multi-objective optimization framework for the integration of distributed generation technologies into electric power network. The algorithm searches for the size and location of different technologies, taking into account uncertainties related to renewable resources availability, failures, power demands and bulk-power supply. A non-sequential MCS-OPF (Monte Carlo simulation and optimal power flow) computational model is developed to emulate the network operation by generating random scenarios from the diverse sources of uncertainty.

The article "Evaluation of a proposed optimization method for discrete-event simulation models" deals with optimization related to discrete events with genetic algorithms. The proposed procedure is an optimization method for discrete-event simulation models based on genetic algorithms which exhibit more efficiency in relation to computational time when compared to software packages on the market.

The article "Combining optimisation and simulation in an energy systems analysis of a Swedish iron foundry" deals with the analysis of possible changes in industrial production processes, and to choose what changes should be made, various modelling tools can be used. This paper uses two types of energy analysis tool: Discrete Event Simulation (DES) and Energy Systems Optimisation (ESO). The results show that the combination of optimization and simulation tools is useful to provide very detailed information about how the system works and to predict system behavior such to minimize system costs. The article "Systems capacity expansion planning: Novel approach for environmental and energy policy change analysis" discloses the use of optimization algorithms to verify and compare different energy policies scenarios (energy incentives).

## OBJECTS AND SUMMARY OF THE INVENTION

It is an object of the present invention to overcome prior art drawbacks. Particularly it is an object of the present invention to define and size technologies to be used in a plant (residential, tertiary service or industrial one) to search for the optimal solution as regards energy or economical perspective (generally according to criteria defined by the user) by a multi-technology and multi-scenario approach.

It is also an object of the present invention to eliminate priority logics of current approaches, while allowing different technologies to be systematically combined.

It is another object of the present invention to reduce time and energies used for defining, selecting, developing and sizing energy efficiency measures.

It is also an object of the present invention to provide a method allowing a program of energy efficiency measures to be determined that has to be carried out over time, therefore in a manner consistent with the economical possibilities of a user.

These and other objects of the present invention are achieved by a method and a system embodying the features of the annexed claims, which are an integral part of the present description.

In one embodiment, the present invention relates to a method and relevant computer system for implementing such method, with the aim of computerized selection of technologies to be applied to improve the energy efficiency of a plant by a multi-technology and multi-scenario approach. The method provides to acquire input data of the plant, to define a target function to be optimized and to use data of a set of technologies applicable to the plant, each technology comprising at least one apparatus characterized by its own consumptions and technical characteristics. Then an optimization process is implemented that determines an optimal set of apparatuses optimizing the target function. The applicable technologies are selected in a wider set of technologies that can be investigated by simulating the use in the plant of the apparatuses of such technologies, and by selecting as the applicable technology the set of apparatuses of the investigable technology that are consistent with the plant consumptions and constraints. Particularly the selection of the applicable technologies occurs by using a parallel approach, where among the plant input data the data necessary for sizing the investigable technology are acquired and, starting from the acquired data, the thermodynamic parameters of the plant necessary for sizing the investigable technology are calculated and the use in the plant of the apparatuses of the investigable technologies is simulated taking into account the calculated parameters.

Therefore such solution provides the advantage of pre-selecting the applicable technologies, such to reduce computational time to calculate the optimum of the target function, for instance the mix of apparatuses reducing energy consumptions of the plant.

Advantageously in one embodiment the optimization process provides to define a plurality of scenarios, wherein a different priority order of the applicable technologies corresponds to each scenario. In this embodiment for each scenario there is provided to:

a) Select, on the basis of current plant energy consumptions, a first apparatus of the applicable technology with higher priority level, said apparatus being the one optimizing the target function;

b) Calculate first new energy consumptions of the plant by simulating the use of said first apparatus in the plant;

c) Select a second apparatus of a second applicable technology that is second in the priority order, said second apparatus being the one among the apparatuses of the second technology that optimizes the target function of a plant that uses the first apparatus and that exhibits said first new energy consumptions;

d) calculate second new energy consumptions of the plant by simulating the use of the first and second apparatus in the plant;

e) select, for each remaining technology, a respective apparatus that optimizes the target function in a plant using the apparatuses previously selected from the technologies with higher priority order

f) Determine a sub-optimal efficiency solution for the plant as the set of apparatuses selected according to steps a) to e);

Therefore the method provides to select as the optimal set of apparatuses the sub-optimal solution that optimizes the target function.

Therefore in this embodiment, the method provides to apply a series approach for searching for an optimum of a target function, such to exploit and take into account the combined effect of the different technologies in the plant. However the suggested method is characterized by the fact of being independent from the constraint, present in known methods of this type, of defining a priority order: it is a multi-scenario method. Moreover by means of an intelligent preselection of technologies applicable to the plant, the method is flexible and it has a not too high computational burden, thus allowing a rapid and accurate mix of technologies applicable to the plant to be obtained in order to achieve the best result expected by the user, both an energy saving and an economical saving, or another parameter.

Further featurs and objects of the present invention will be more clear from the following description.

## BRIEF DESCRIPTION OF THE DRAWINGS

The invention will be described below with reference to some not limitative embodiments, provided by way of example and not as a limitation in the annexed drawings. These drawings show different aspects and embodiments of the present invention and, where appropriate, reference numerals showing like structures, components, materials and/ or elements in different figures are denoted by like reference numerals.

Figure 1 is a flow diagram of a first method for accomplishing energy efficiency in a plant according to prior art.

Figure 2 is a flow diagram of a second method for accomplishing energy efficiency in a plant according to prior art.

Figure 3 is a computer system able to implement the method for accomplishing energy efficiency in a plant according to the present invention.

Figure 4 is a generic flow diagram of the method for accomplishing energy efficiency in a plant according to the present invention.

Figure 5 is a flow diagram of a process (called as *Function*) for sizing a technology to be used in the plant.

Figure 6 is a flow diagram of the optimization step of method of figure 4.

Figure 7 is a flow diagram of a block provided in the diagram of figure 6.

## DETAILED DESCRIPTION OF THE INVENTION

While the invention is susceptible of various modifications and alternative forms, some preferred embodiments are shown in the drawings and will be described below in details. It should be understood, however, that there is no intention to limit the invention to the specific embodiment disclosed, but, on the contrary, the intention of the invention is to cover all modifications, alternative constructions and equivalents falling within the scope of the invention as defined in the claims.

The use of "for example", "etc", "or" indicates non-exclusive alternatives without limitation unless otherwise defined. The use of "comprise" means "comprise, but not limited to," unless otherwise defined.

In the present description the term "scenario" means a multi-technology energy efficiency proposal in which interactions among the several proposable technologies are evaluated, with consequent different operating points and operating conditions (possibly in off design) of each individual technology of the considered mix.

In the present description the term "target function" means a mathematical model describing a parameter of interest as a function of some variables, specifically plant parameters. An example of a target function can be the plant management cost, which depends on personnel costs, on equipment depreciations, but also on energy consumptions and on energy sources used for generating energy. Still, a target function can be also electric energy consumption, which depends on the number/type and operating point of the equipment present in the plant.

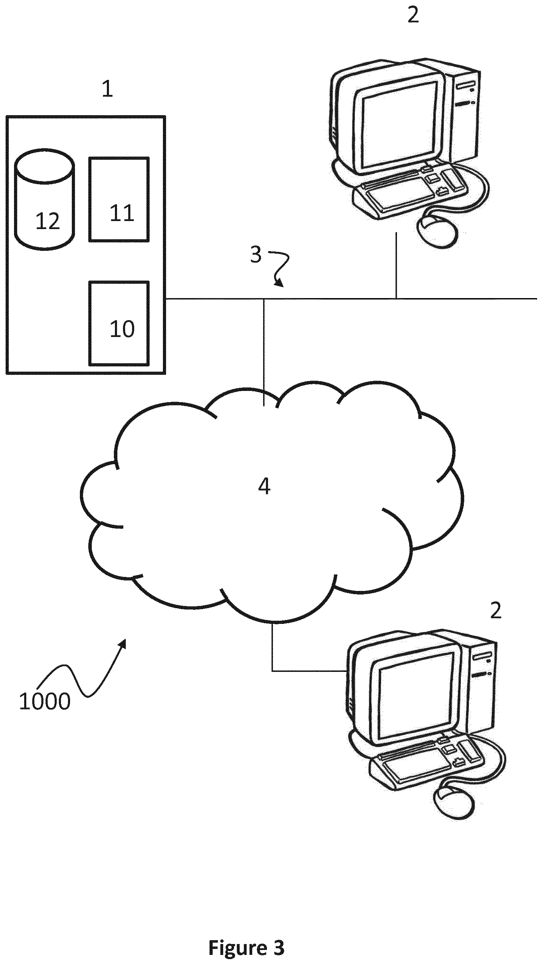

Figure 3 shows a computer system able to implement a method selecting and sizing apparatuses/technologies to be inserted in a plant such to provide energy efficiency.

In the example of figure 3, the computer system 1000 comprises a server computer 1 able to provide services for personal computers 2, or generally, for remote devices (e.g. PC, tablets, smartphones, etc...), connected thereto through a local network 3 or a data network 4 such as internet or a mobile telephone network.

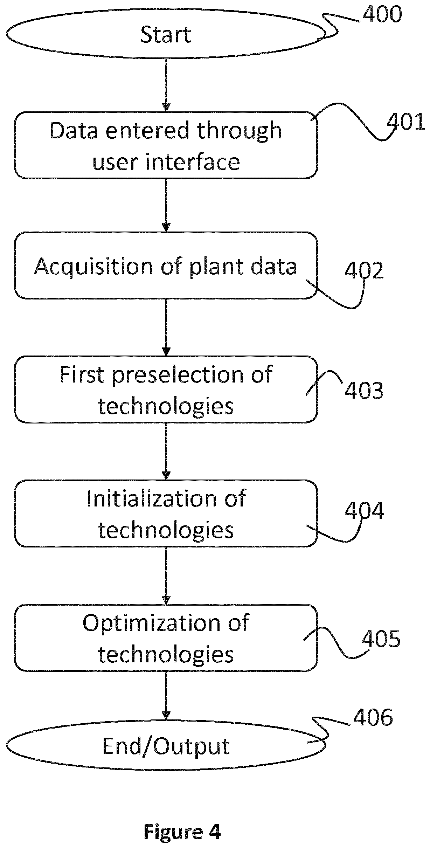

The computer system 1000 allows a method to be implemented shown below with reference to figures 4-7, to select technologies to be used in a plant.

The method begins with a "Start" step 400 where the user starts the application from his/her computer 2 to improve energy efficiency of a plant.

By means of a suitable user interface, he/she enters plant data necessary to define the optimal technological scenario (step 401).

In one embodiment, the user interface can be offline (for example on Microsoft Excel® ) therefore the user interacts with such interface offline by uploading the necessary data that later will be processed and transferred to the server for the relevant processing. As an alternative the interface can be online. Particularly it can be a web interface, for example developed in Ruby® environment. In this case the user uploads data directly in the web and they are acquired and put on a database, for example Microsoft Excel® spreadsheet or Oracle® table accessible from the processor 10 of the server 1.

As mentioned above, by means of the interface the user transfers to the server 1 the plant data to be optimized. Such data preferably are a list of basic information of the plant: for example sector, nation, *baseline* consumptions, rating of the present technologies (e.g. rating of a boiler or a motor), operating logics, etc.

By acquiring input data of the plant (step 402) the processor 10 of the server 1 executes code portions, stored in a memory area 11, of a *main* program. Such portions implement the steps described below. Firstly plant data are acquired (step 401) and a first selection of investigable technologies (step 402) is made. To this end the server 1 is equipped with a database 12 containing information about many apparatuses belonging to different technologies. Such information comprises also possible constraints deriving from national regulations or from past experiences, for instance a given technology or a given apparatus may not be usable in a specific technological sector or in a specific country.

Based on information about the sector and the country, therefore the method provides to exclude some technologies and/or apparatuses present in the database from the set of technologies investigable for being used in the plant. In a preferred embodiment, in order to make easier to enter data and in order to limit the acquisition only to necessary data of the plant (consequently speeding up and simplifying the input step) the user interface is configured to automatically cancel from the data acquisition frame those information that serve for analysing technologies that cannot be applied.

Advantageously then some of the constraints for pre-selecting the investigable technologies can be entered by the user through the user interface. For instance in one embodiment the user can decide to exclude beforehand some technologies (for example due to moral choices). Still through the user interface the user can choose whether include in the economic analyses the incentives that can be applied to the several technologies and the value to be given thereto. Such incentives will be applied only if the analysed plant is within the country where these incentives are valid and if it completely meets the requirements for obtaining them.

Then the method provides an "initialization" step 404 where the investigated technologies resulting from the Preselection 403 are initialized.

The "initialization" step provides to start a standalone simulation of each preselected technology, with a parallel approach, similar to that of figure 2, that does not take into account interactions, overlapping and cannibalizations of one technology with another technology. Such simulation is made by executing suitable programs, called as *Functions* below, provided for the several technologies where the energy input data are the general data of the plant.

The *Function* of a technology is an algorithm provided as a tool for estimating the feasibility of an energy efficiency intervention applied to a process and to one or more energy flows of the plant, as well as a tool for selecting optimal supplier, size and operating point within a scenario. The algorithm is arranged in a manner as much general as possible, considering the application of the technology to different energy flows or processes that can be present in different plants. Therefore the *Function* is like a black box, that receives input data of the plant and that outputs:

> 1. data of apparatuses that implement the technology and that can be used in the plant;
> 2. the impact of such plants on a target function set by the user or provided by default in the system, for example the apparatus management cost or its energy consumptions, or both of them.

Preferably the *Function* outputs also the operating point of such apparatuses to obtain as output the provided target function.

For example if the technology is the cogeneration system technology and if the plant requires a constant electric power of 50 kW, the *Function* will operate at the nominal load the cogenerators of less than 50kW and it will provide an operation at a partial load (with relevant efficiency due to the off design operation) for cogenerators of more than 50kW.

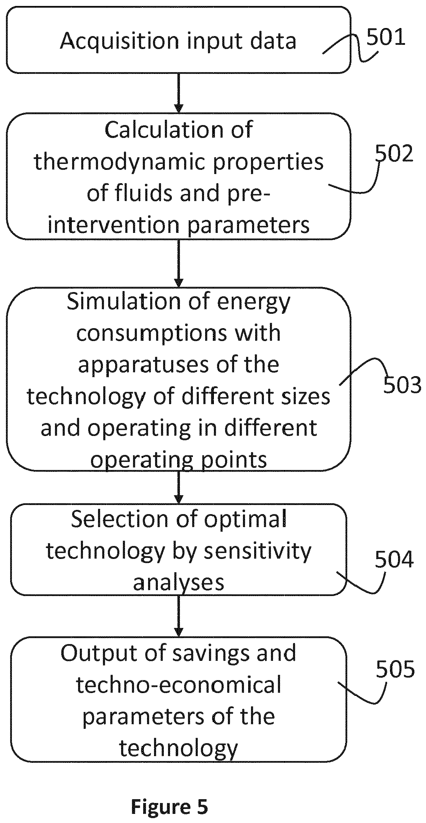

In details, a possible algorithm of the *Function* is shown herein below with reference to figure 5. In such example, the algorithm is developed in five sections:

> 1. Acquisition of inputs (reference 501);
> 2. Basic calculation of thermodynamic properties of fluids and parameters before the intervention (502);
> 3. Sizing (503) of the technology with a simulation of all the sizes that can be applied (also under off design operating conditions) and calculating the savings that can be achieved by using the algorithm of the technology, their valorization and creating the business plan. The procedure can be performed by simulating several sizes of many qualified suppliers;
> 4. Selecting (504) the "optimal" size, operating point and supplier on the basis of the target function set by the user;
> 5. Creating the outputs.

The *Function* receives as input (step 501) the plant data necessary for its sizing. That is to say the *Function* does not receive as input all the plant data entered by the user through the user interface, but only the data necessary for the technology to which it refers.

For instance in the event the analysed technology is a economizer, as already set forth above, the required data are about:

- Characteristics of the involved thermal plants: it requires information such as type of plant, size of the flue, potentiality, performances, energy consumptions, fuel and operating hours both of the plant to which the economizer has to be applied and of the plant currently used for heating the user appliance. In this field prices of electric energy and fuels about the supply contracts of the site under examination are further required;

- Characteristics of the thermal carrier: it requires information about the thermal carrier composing the user appliance of the economizer. They comprise the mean mass flow rate (in case of heating of the working fluid), the mean specific heat, the input temperature and if available a fixed set-point, the output temperature. In case of production of vapor, the line pressure and the latent specific heat of vaporization are further required;

- Characteristics of the fuel: it requires fuel properties, such as calorific power, mean density, combustion stoichiometric ratio, steam stoichiometric production;

- Characteristics of flue gases: it requires information specifically related to flue gases from which heat has to be recovered. In particular, their composition and temperature, as shown in combustion analyses, the minimum temperature acceptable at the exit of the economizer, related to the type of used fuel, the mean condensation temperature of the vapor contained therein and the mean specific heat, also related to the type of fuel used.

Then the *Function* (step 502) proceeds to calculate the pre-intervention thermodynamic properties of fluids and parameters, namely the parameters of the plant before applying the involved technology.

Still with reference to the example of the economizer, such section is in charge of the analytical calculation of:

- specific heat of flue gases;
- mass flow rate of flue gases;
- mass flow rate of the thermal carrier (in case of the use of the economizer for pre-heating the working fluid).

The specific heat of flue gases is calculated considering them to be a mixture of $CO_2$, $O_2$, $H_2O$ and $N_2$ according to the following equation:

$$cp_{fumi} = \sum cp_i \cdot x_i$$

where cp is the specific heat at constant pressure [kJ/kgK], x is the mole fraction [-] and the subscript i denotes the i-th species. The specific heat of the individual compounds is calculated by means of empirical formulas.

The annual mass flow rate of the flue gases therefore is calculated by balance mass, considering the consumed fuel, the stoichiometric air amount necessary for its combustion and the excess air to which the boiler operates. The mean flow rate is then deduced from the estimate of the operating hours of the device.

The mass flow rate of the thermal carrier is finally calculated by the energy balance, by knowing the mean power of the boiler, the input and output temperature of water, and in case of production of vapor, the latent heat of vaporization, such as shown in the following equation:

$$\dot{m} = \frac{Q}{cp\Delta T + h_l}$$

where $\dot{m}$ is the mass flow rate of the thermal carrier [kg/s], $\dot{Q}$ is the mean power produced by the boiler [kW], $\Delta T$ is the temperature increase of the thermal carrier in the boiler [K] and $h_l$ is the specific latent heat of vaporization of the thermal carrier [kJ/kg].

It has to be noted that some parameters can be entered by the user among the plant data or can be determined automatically by the system. Such solution is particularly suitable since it allows the method to be dynamically adapted on the basis of the available data.

After calculating the thermodynamic parameters of the plant on which the application of the technology is desired to be simulated, the method implemented by the *Function,* step 503, provides to carry out the simulation of the application of several apparatuses of different sizes and/ or suppliers and operating in different operating points of the technology with a consequent calculation of energy and/or economic savings that can be achieved and of the business plan in the case the target function to be optimized is the economic saving that can be obtained within a specific time range. The choice is performed while guaranteeing to observe the operating range of the devices, as determined by the manufacturer of the technology involved.

For instance, in the case of the economizer the device must be able to contemporaneously meet the constraints about:

- the passage section for flue gases;
- flow rate of the thermal carrier fluid.

The first constraint forbids economizers with a passage section for flue gases smaller than that of the flue of the existing boiler to be installed. The second constraint, on the contrary, allows only the devices with a minimum flow rate of thermal carrier lower than the one previously calculated for the specific case to be selected.

Each technology will be sized by searching for the solution in terms of apparatuses and operating points that give the best result of the target function. In order to carry out the most suitable choice sensitivity analyses are set by varying the parameters of the *Function* within suitable variability ranges.

In another example, if the target function is the management cost of the plant, then the algorithm of the *Function* calculates (by using data provided by the manufacturer of the apparatus) the energy savings that can be achieved by using the "new" Technology of the plant. Now the algorithm calculates all the cash flows within a specific time range, for instance fifteen years, from the investment made. Such costs comprise:

- cost of the machine body;
- cost of possible optional elements;
- packing and shipping cost;
- cost of systems accounting the real savings;
- charges of design and arrangement of possible authorizations;
- management costs;
- costs of scheduled (ordinary) or extraordinary maintenance and service (when required by the user by a suitable graphical interface);
- extended warranty costs (when required by the user by a suitable graphical interface);
- Savings attributable to reduction of consumptions;
- Incentives (when present, and only if the user decides to take them into account);
- costs due to the increase in acquisition of energy carriers (for instance, in the case of the installation of an economizer in a plant using also a cogenerator, the possible higher cost of electric energy that is no more produced by the cogenerator should it be turned off).

Based on all such costs, the *Function* calculates the trend of plant management costs within a given time range should the apparatus of the considered size and operating in the given operating point be used.

At the end of such step 503 therefore the algorithm of the *Function* will calculate the value of the target function (e.g. the annual energy saving or costs during a five-year period or so on) for each apparatus and for different operating points of the Technology.

At the end of simulations, the *Function* (step 504) selects, among those of the considered technology, the apparatus (size, supplier) and the operating point that optimize the target function desired, for example the apparatus minimizing the management costs or minimizing the energy consumptions of the plant. Finally in step 505 the structure of the output data is generated, which contains data of all the apparatuses belonging to the technology that are consistent with the plant data (e.g. all those apparatuses that are able to provide the energy data entered as input) and that summarize the Technology under examination:

- identification data (e.g. a code or a progressive number) of the apparatus;
- energy and/or economic data of the plant calculated in the simulations of use of the apparatus.

The output data structure then comprises information about the apparatus of the technology that optimizes the target function (e.g. reducing the maintenance cost).

With reference again to the "initialization" process 404, as mentioned above, it provides to execute the *Functions* of the different investigated technologies. Such *Functions* will output, due to what said above with reference to figure 5, the identification data of the apparatuses usable in the plant since being consistent with the plant data entered by the user. The set of apparatuses selected in this manner below will be denoted as the set of the investigated and applicable technologies.

After the "initialization" step 404, there is provided the "optimization" step 405, aiming at finding, among all the investigated and applicable technologies, the mix thereof optimizing the target function.

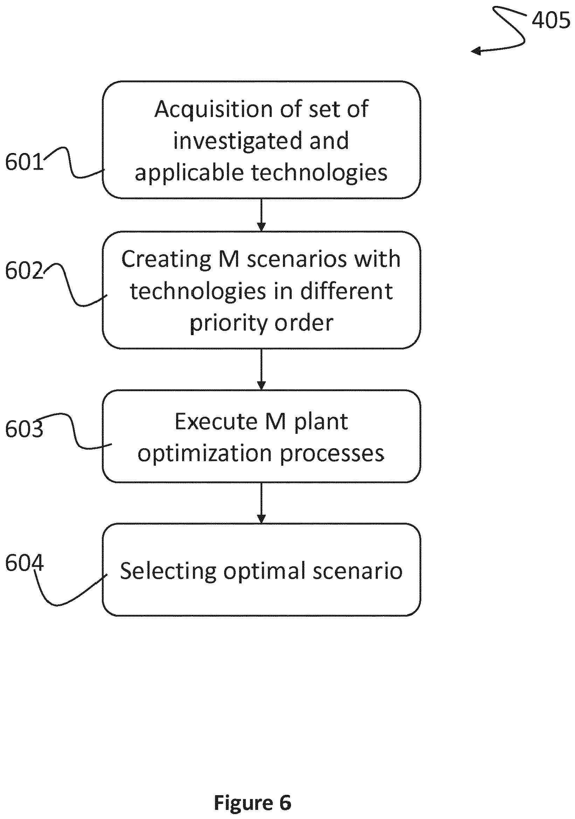

In a first embodiment, the "optimization" step 405, shown in figure 6, provides to calculate the value of the target function for a plurality of scenarios defined by establishing different orders of priority for the technologies and by applying, for each scenario, a series approach for plant efficiency improvement.

After having acquired (step 601) output information from the "initialization" step of the investigated and applicable technologies, the M (M being an integer greater than 1) different scenarios are generated (step 602). The different priority orders can be generated in different manners, for example by using for cycles that run the investigated and applicable technologies or by using suitable routines, such as Matlab® functions for calculating the possible combinations (e.g. combntns, nchoosek).

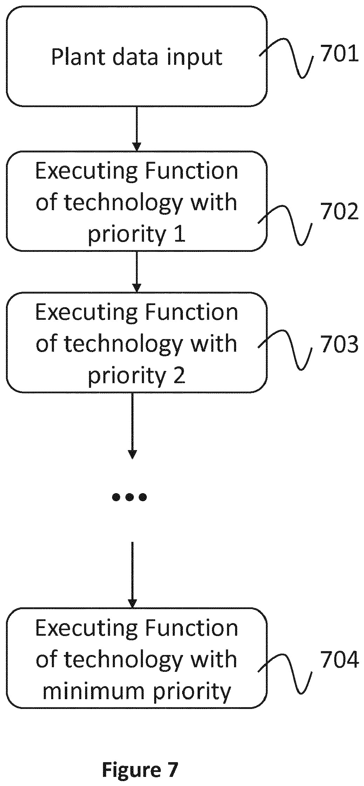

For each scenario (step 603) a process searching for a solution optimizing the target function of the type described below with reference to figure 7 is executed. Each one of such processes provides to execute the *Function* of the first technology (step 702) in the priority order. Such *Function* thus allows the technology 1 to be sized on the basis of the data of the plant provided by the user and supplied as input to the *Function* (step 701). As described above with reference to figure 5, the *Function* outputs the applicable apparatuses, and also the indication of the apparatus and of the operating point that allow the target function to be optimized. The same *Function* outputs the energy consumptions of the plant that would be present by using such apparatus in the plant. Energy consumptions calculated in this manner are used as input data for the *Function* of Technology 2 in the priority order, that, after being executed (step 702) will provide as output the indication of the apparatus that optimizes the target function in the simulated plant that uses the first two technologies.

Then the process is repeated for all the other technologies (step 704) each one being sized on the basis of the energy consumptions received as input, that is the ones calculated for a plant using all the preceding technologies in the priority order.

Cost and/or consumption data are automatically updated each time a Technology is applied. This occurs by means of a data structure containing said cost and/or consumption data, that is updated after each start of a *Function.* Such continuous overwriting allows the physical database necessary for the simulation to be minimized, since only the structure of output data of each scenario is stored (and not all the intermediate steps of the scenario itself.). Once all the *Functions* of the various technologies are executed, a mix of apparatuses composing a sub-optimal solution (scenario) for the efficiency problem of the analyzed plant is determined.

After calculating the sub-optimal solutions of all the possible scenarios (that is all the combinations in the priority order), the "optimization" step 405 provides (step 604) to select as the optimal solution the sub-optimal solution, among all the calculated ones, that optimizes the target function.

In one embodiment, if there are sub-optimal solutions having the same optimal value of the target function, the method provides to submit to the user, through the graphical user interface, the possibility of defining at least another secondary criterion, preferably three of them, by means of which creating a prioritization among "equal" scenarios as regards the target function. In this case therefore the scenario corresponding to the mix of technologies having the best parameters will be selected as the optimal one.

In an alternative embodiment, the "Optimization" step provides to use an optimization algorithm for searching for the scenario that maximizes (or minimizes) a predetermined target function or selected by the user by the user interface (for example IRR, profitability index, *Payback,* net present value of the overall investment). As in the example described above with reference to figures 6 and 7, if there are solutions having the same value of the main parameter, the method provides to offer to the user, through a graphical interface, the possibility of defining one or more further secondary criteria with which creating a prioritization among "equal" scenarios as regards the target function.

Examples of optimization algorithms are the deterministic algorithms (not usable for this application) and the stochastic ones. The category of the deterministic algorithms comprise techniques such as the Conjugated Gradient one, while the stochastic methods comprise genetic algorithms (based on genetic and natural selection principles), the simulated annealing one, the particle swam optimization one, the ant colony optimization ones (based on the cooperative behavior of such insects, that allows them to find the shortest path between their colony and a source of food), fuzzy optimization (fuzzy optimizations methods), methods based on neural networks. Therefore generally the optimization algorithms are known per se by the person skilled in the art, and therefore no further reference is made thereto in details.

Generally this embodiment that searches for the optimum (mathematically the maximum or minimum) of the target function has a computational burden lower than the optimization method described above with reference to figures 6 and 7.

In the preferred embodiment, at the end of the "initialization" step 404, the method provides to estimate the computational time of the optimization step by using the method of figure 6 and 7. The estimate is preferably carried out by using tables accessible by the processor 10 that implements the method. Such tables are provided for the several target functions selectable by the user and for the different combinations of technologies and they store mean computational time deriving from empirical tests or mathematical estimates. Obviously the physical execution time depends on hardware of the server 10 that carries out the method of figure 4, therefore in one embodiment by the graphical interface the user can select a type of hardware and can set a maximum time for the computation. If the maximum time is higher than the time provided by the tables for the selected hardware, the processor 10 is configured for implementing an optimization step that uses an optimization algorithm different from the one of figure 6 and 7.

After determining the optimal mix of technologies, the method at step 406 ends by showing to the user information about achievable energy consumptions and/or about costs of the management time of the plant optimized with the mix of selected apparatuses. Such output data can be inserted in a file that is put at disposal of the computer 2 from which the user works or can be printed. Advantageously in one embodiment the output data show not only the data about the optimal calculated scenario, but also the data of one or more non optimal scenarios as regards the target function, to allow the user to select among different technological mixes.

It is clear from the above description therefore how the technical solution according to the present invention, in its various aspects, allows the above objects to be achieved.

It is also clear, for a person skilled in the art, that it is possible to make changes and further variants to the solution described with reference to the annexed figures, without for this reason departing from the teaching of the present invention and from the scope of protection as defined in the annexed claims.

In particular it is clear that the invention refers not only to a general method for selecting the technologies to be used to improve the energy efficiency of a plant, but it is also directed to a computer program containing code portions that, once executed by a computer or, generally by a computer system, allow the method to be implemented.

Although the invention has been described with reference to a particular computer system, wherein a server and a remote computer cooperate to implement the method for the energy optimization of a plant, it is clear that such computer system has not to be intended as a limitative example of the invention, the same functions being implementable by only one computer or by a plurality of cooperating computers. The code portions that allow the method to be carried out therefore that be distributed in different manners on different computers, for example in a cloud environment.

**Claims**

1.  Method for the computerized selection of technologies to be applied in order to improve the energy efficiency of a plant, comprising the steps of:

    - acquiring input data of the plant (402);
    - defining a target function to be optimized;
    - acquiring a set of technologies applicable to the plant (601), each technology comprising at least one apparatus **characterized by** its own consumptions and technical characteristics;
    - Implementing an optimization process (305) that determines an optimal set of apparatuses belonging to different applicable technologies, said set of apparatuses being the one that optimizes the target function;

    **Characterized in that** the applicable technologies are selected in a group of investigable technologies by a process wherein, for each investigable technology of said group, the following steps are carried out:

      i. Acquiring (501), among said input data of the plant, the data necessary for sizing the investigable technology;
      ii. Starting from the acquired data, calculating (502) thermodynamic parameters of the plant necessary for sizing the investigable technology;
      iii. Simulating (503) the use in the plant of the apparatuses of the investigable technology by using the thermodynamic parameters calculated at point ii);
      iv. Selecting (504) as the applicable technology the set of apparatuses of the investigable technology that are consistent with the plant consumptions and constraints.

2.  Method according to claim 1, wherein the optimization process provides to:

    - define a plurality of scenarios, wherein a different priority order of the applicable technologies corresponds to each scenario;
    - for each scenario:

      a) Selecting (701), on the basis of current plant energy consumptions and costs, as well as of the currently present technologies with the relevant energy performances, a first apparatus of the applicable technology with higher priority level, said apparatus being the one optimizing the target function;

b) Calculating first new energy consumptions of the plant by simulating the use of said first apparatus in the plant;

c) Selecting (702) a second apparatus of a second applicable technology that is second in the priority order, said second apparatus being the one among the apparatuses of the second technology that optimizes the target function in a plant that uses the first apparatus and that exhibits said first new energy consumptions;

d) calculating second new energy consumptions of the plant by simulating the use of the first and second apparatus in the plant;

e) selecting (704), for each remaining technology, a respective apparatus that optimizes the target function in a plant using the apparatuses previously selected from the technologies with higher priority order

f) Determining a sub-optimal efficiency solution for the plant as the set of the apparatuses selected according to steps a) to e);

- selecting (604) as the optimal set of apparatuses the sub-optimal solution that optimizes the target function.

3. Method according to claim 2, wherein said plurality of scenarios comprise all the possible permutations of the priority order of the applicable technologies.

4. Method according to claim 2 or 3, wherein selection step e) provides to evaluate different operating points in off-design condition of the apparatus with the relevant energy performances.

5. Method according to claim 2 or 3 or 4, wherein the data of energy consumptions calculated at the end of the selection of an apparatus of a technology, are overwritten to the data of energy consumptions previously calculated for the selection of the apparatus of the previous technology in the priority order.

6. Method according to claim 1 or 2 or 3 or 4 or 5, wherein:

- at least a secondary optimization criterion for the plant is received from the user, and wherein
- said at least one secondary criterion is used to select as the optimal solution the solution among several sub-optimal solutions that are equivalent as far as the optimization of the target function is concerned.

7. Method according to any claims 1 to 6, wherein the optimization process can be implemented according to two different methods with different execution time, and wherein on the basis of the plant input data and on the target function, the execution time of the optimization process having higher execution time is estimated and the optimization process with higher execution time is implemented only if the estimate exceeds a predetermined value.

8. Method according to claim 7, wherein the estimate is made by using tables arranged before starting the method.

9. Method according to claim 7 or 8, wherein a first method is an optimization process according to any claim 2 to 5.

10. Method according to claim 9, wherein the second method for implementing the optimization process provides to implement a stochastic optimization algorithm belonging to the group comprising: genetic algorithms, simulated annealing algorithms, particle swam optimization, ant colony optimization, fuzzy logic optimizations, algorithms based on neural networks.

11. Computer program comprising code portions that, when executed by a computer, allow a method according to any of the claims 1 to 10 to be implemented.

12. Computer system comprising:

- At least one graphical user interface intended to allow a user to enter plant input data and to indicate at least one target function to be optimized;
- At least one database containing information about a plurality of technologies, said database comprising at least data about a plurality of apparatuses and information necessary to calculate thermodynamic parameters of interest for the technology;

at least one processor operatively connected to said graphical interface and to said at least one database and configured to implement a method according to any of the claims 1 to 10.

| Plant data | 100 |

Selecting technology 1 — 101

Sizing technology 1 that leads to optimization of the target function (for example payback) on the basis of overall consumptions of the plant — 102

Residual consumptions (after technology 1) — 103

Selecting technology 2 — 104

Sizing technology 2 that leads to optimization of the target variable (for example payback) on the basis of overall consumptions of the plant — 105

Residual consumption (after technologies 1 and 2)

...

Residual consumption of the plant (after n technologies) — 106

**Figure 1**
**PRIOR ART**

EP 3 301 620 A1

| Plant data |
| --- |

| Selection of technology 1 | Selection of technology 2 | Selection of technology n |
| --- | --- | --- |
| Sizing the technology 1 that leads to optimization of the target variable (for example payback) on the basis of overall consumptions of the plant | Sizing the technology 2 that leads to optimization of the target variable (for example payback) on the basis of overall consumptions of the plant | Sizing the technology n that leads to optimization of the target variable (for example payback) on the basis of overall consumptions of the plant |

Technology 1      Technology 2      Technology n

**Figure 2**
**PRIOR ART**

**Figure 3**

Start — 400

Data entered through user interface — 401

Acquisition of plant data — 402

First preselection of technologies — 403

Initialization of technologies — 404

Optimization of technologies — 405

End/Output — 406

**Figure 4**

Acquisition input data — 501

Calculation of thermodynamic properties of fluids and pre-intervention parameters — 502

Simulation of energy consumptions with apparatuses of the technology of different sizes and operating in different operating points — 503

Selection of optimal technology by sensitivity analyses — 504

Output of savings and techno-economical parameters of the technology — 505

**Figure 5**

405

601 — Acquisition of set of investigated and applicable technologies

602 — Creating M scenarios with technologies in different priority order

603 — Execute M plant optimization processes

604 — Selecting optimal scenario

**Figure 6**

```
┌─────────────────────────────┐
│                             │
│      Plant data input       │  ⌇ 701
│                             │
└─────────────────────────────┘
              │
              ▼
┌─────────────────────────────┐
│      Executing Function     │
│     of technology with      │  ⌇ 702
│          priority 1         │
└─────────────────────────────┘
              │
              ▼
┌─────────────────────────────┐
│      Executing Function     │
│     of technology with      │  ⌇ 703
│          priority 2         │
└─────────────────────────────┘
              │
              ▼

             ● ● ●

              │
              ▼
┌─────────────────────────────┐
│      Executing Function     │
│     of technology with      │  ⌇ 704
│       minimum priority      │
└─────────────────────────────┘
```

**Figure 7**

Europäisches
Patentamt

European
Patent Office

Office européen
des brevets

## EUROPEAN SEARCH REPORT

Application Number

EP 16 19 2073

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 560 113 A1 (GEN ELECTRIC [US]) 20 February 2013 (2013-02-20) * figures 1-5 * * paragraph [0001] * * paragraphs [0003] - [0005], [0009] - [0015] * | 1-12 | INV. G06Q10/06 |
| A | BAOS R ET AL: "Optimization methods applied to renewable and sustainable energy: A review", RENEWABLE AND SUSTAINABLE ENERGY REVIEWS, ELSEVIERS SCIENCE, NEW YORK, NY, US, vol. 15, no. 4, 27 December 2010 (2010-12-27), pages 1753-1766, XP028177318, ISSN: 1364-0321, DOI: 10.1016/J.RSER.2010.12.008 [retrieved on 2010-12-31] * the whole document * | 1-12 | |
| | | | **TECHNICAL FIELDS SEARCHED (IPC)** G06Q G06F |

The present search report has been drawn up for all claims

| Place of search | Date of completion of the search | Examiner |
|---|---|---|
| The Hague | 18 January 2017 | Meijs, Koen |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 19 2073

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2017

| Patent document cited in search report | | Publication date | Patent family member(s) | | Publication date |
|---|---|---|---|---|---|
| EP 2560113 | A1 | 20-02-2013 | EP 2560113 A1 | | 20-02-2013 |
| | | | US 2013046519 A1 | | 21-02-2013 |

For more details about this annex : see Official Journal of the European Patent Office, No. 12/82